# EUROPEAN PATENT SPECIFICATION

(11) **EP 0 783 230 B1**
(45) Date of publication and mention of the grant of the patent: **06.03.2002**
(21) Application number: 96308597.2
(22) Date of filing: 28.11.1996
(51) Int. Cl.: H04N 7/30

(54) **Transform coding of arbitrarily shaped image segments**
Transformationskodierung beliebig geformter Bildsegmente
Codage par transformation de régions d'image de forme arbitraire

(30) Priority: 29.11.1995 KR 9544958; 28.10.1996 KR 9649253
(43) Date of publication of application: 09.07.1997
(73) Proprietor: Samsung Electronics Co., Ltd., Suwon City, Kyungki-do (KR)
(72) Inventor: Kang-Wook ,Chun, Kumchun-Gu, Seoul (KR); Byeungwoo, Jeon, Sungnam-City, Kyongki-Do (KR)
(74) Representative: Neill, Alastair William

(56) References cited:
- EP-A- 0 649 258
- WO-A-95/22228
- US-A- 4 189 748
- US-A- 5 038 390
- US-A- 5 177 799
- US-A- 5 309 231

## Description

The present invention relates to transformation coding apparatus for a block including a boundary of an object having a certain shape and more particularly, but not necessarily exclusively, to a transformation coding apparatus for a block including a boundary of an object having a certain shape which effectively accomplishes transformation coding by selecting a transformation coefficient considering a restoring quality of picture of an area including a boundary of an object having a certain shape.

Generally, transformation coding is performed to reduce an amount of data by removing redundancy of a video signal. In transformation coding, a picture frame is divided into blocks each having a size of NxN data, and transformation coding is performed for each block, to thereby convert a video signal in a spatial domain into a signal in a frequency domain. According to such a transformation coding, the energy of a signal (the value of a transformation coefficient) is chiefly concentrated in a lower frequency band. For the above transformation coding, a discrete cosine transformation is most widely used. The transformation coding also proposes a coding technology for further compressing an amount of data by quantizing the transformation coefficients and variable-length-coding the quantized data.

Since the transformation coding technology performs transformation coding with respect to an NxN sized rectangular block, it is inefficient to perform a general transformation coding when a boundary of an object of a certain shape is included in a particular block. Thus, when a boundary of an object of a certain shape is included in a particular block, a transformation coding method for separately transforming the area of the object having a certain shape and the other background area has been proposed.

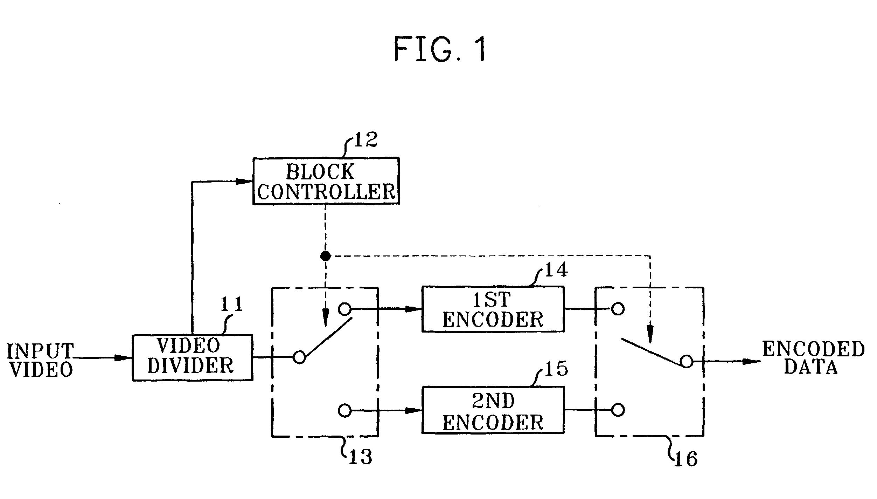

Figure 1 is a block diagram of a general encoding apparatus for encoding an input video signal. As shown in the drawing, the general encoding apparatus includes a video divider 11. The video divider 11 divides the input video into blocks each having a size of NxN data. The NxN blocks are applied to a block controller 12 and a first switch 13. The block controller 12 judges whether each input block of the NxN data includes a boundary of an object of a certain shape, and controls the first switch 13 according to the judgement result. The first switch 13 applies the NxN sized blocks input from the video divider 11 to a first encoder 14 or a second encoder 15 under the control of the block controller 12. The control operation of the block controller 12 will be described in more detail below. If the input block does not include a boundary of an object having a certain shape according to the judgement of the block controller 12, the block controller 12 controls the first switch 13 to apply the input block to the first encoder 14. On the contrary, if the input block includes a boundary of an object having a certain shape according to the judgement of the block controller 12, the block controller 12 controls the first switch 13 to apply the input block to the second encoder 15. The first encoder 14 encodes a video signal block according to a general transformation coding method. The second encoder 15 performs transformation coding for a block including a boundary of an object of a certain shape, which will be described later. A second switch 16 is selectively connected to the outputs of the first encoder 14 and the second encoder 15. The second switch 16 also operates under the control of the block controller 12. In more detail, if the input block does not include a boundary of an object having a certain shape according to the judgement of the block controller 12, the block controller 12 controls the second switch 16 to select the output of the first encoder 14. On the contrary, if the input block includes a boundary of an object having a certain shape according to the judgement of the block controller 12, the block controller 12 controls the second switch 16 to select the output of the second encoder 15. Thus, the second switch 16 outputs the transformation coded data with respect to the input blocks.

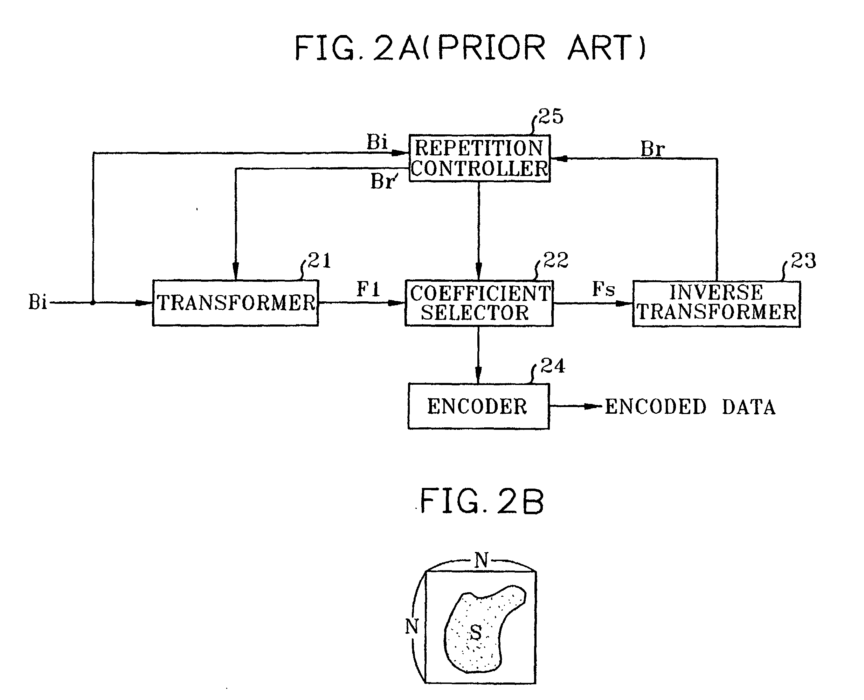

Figure 2A is a detailed block diagram of the second encoder of the Figure 1 apparatus, and Figure 2B is a view for explaining an area requiring transformation coefficient selection in the second encoder of Figure 2A. That is, Figure 2A is a transformation coding apparatus for a block including a boundary of an object having a certain shape according to the prior art.

As described above, the second encoder 15 performs transformation coding for a block including a boundary of an object having a certain shape. A transformer 21 discrete-cosine-transforms (hereinafter abbreviated as DCT-transforms) input NxN blocks (Bi) including a boundary of an object having a certain shape input from the video divider 11, to produce NxN transformation coefficients F1 which are input to a coefficient selector 22. The coefficient selector 22 selects M particular coefficients from the input NxN transformation coefficients F1 and sets the other transformation coefficients as zeros. The select coefficients Fs selected by the coefficient selector 22 are input to an inverse transformer 23. The inverse transformer 23 inversely transforms the input select coefficients Fs to restore a block, which is called a restored block Br. The restored block Br is input to a repetition controller 25. The repetition controller 25 calculates a mean square error of the input block Bi and the restored Br and compares the mean square error with a predetermined reference value. When the repetition controller 25 calculates the mean square error, it calculates the mean square error only with respect to the area including a boundary of an object having a certain shape. As shown in Figure 2A, when the area including a boundary of an object having a certain shape is indicated as a character "S", a mean square error is calculated only with respect to pixels within the "S" area. If a mean square error calculated by the repetition controller 25 is larger than a predetermined reference value, the repetition controller 25 replaces pixel data of an area "S" including a boundary of an object having a certain shape in the restored block Br by pixel data in a corresponding area of the input block Bi, to form a reconstructed block Br', which is input to the transformer 21. The transformer 21 DCT-transforms the input reconstructed blocks (Br') to produce NxN transformation coefficients which are input to the coefficient selector 22. The coefficient selector 22 selects M particular coefficients. The select coefficients selected by the coefficient selector 22 are inversely transformed in the inverse transformer 23 to produce a restored block Br. The repetition controller 25 calculates a mean square error of the input block Bi and the restored Br. The above processes are repeated until the mean square error is smaller than a predetermined reference value. When the mean square error calculated by the repetition controller 25 is smaller than a predetermined reference value, the coefficient select by the coefficient selector is completed. If the coefficient selection is completed, the coefficient selector 22 outputs the selected coefficients to an encoder 24, which encodes the selected coefficient and finally outputs the encoded data.

In the above general apparatus, the coefficient selector 22 selects M coefficients in sequence of a larger value of energy among the NxN transformation coefficients, which minimizes an error in the whole area of the NxN sized block. However, since a meaningful portion in the NxN sized block is an area including a boundary of an object having a certain shape, such a transformation coefficient selection method is not efficient.

EP-A-0 649 258 discloses the pre-characterising features of claim 1 appended hereto.

It is an aim of preferred embodiments of the present invention to provide a transformation coding apparatus for a block including a boundary of an object having a certain shape which performs transformation considering a restoring quality of picture with respect to an area including a boundary of an object having a certain shape in the block not a restoring quality of picture with respect to the whole blocks when selecting coefficients.

According to the present invention, there is provided a transformation coding apparatus for a block including a boundary of an object having a certain shape, the transformation coding apparatus comprising:
transformer means for transforming untransformed data of an input block and outputting transformation coefficients;
inverse transformer means for inversely transforming transformation coefficients and outputting a restored block;
encoding means for variable-length-coding coefficients; and
a repetition controller for calculating a mean square error of the untransformed data of the input block and the restored block, and comparing the calculated result with a predetermined reference value; characterised in that the transformation coding apparatus further comprises:
   transformation coefficient select means for selecting and outputting transformation coefficients using the transformation coefficients and the untransformed data of the input block;
   the transformation coefficients inversely transformed by the inverse transformer means being those selected by the transformation coefficient select means;
   the coefficients for variable-length-coding by the encoding means being the select coefficients selected by the transformation coefficient select means; and
   the repetition controller determining whether or not coefficient selection is continued;
   said transformation coefficient select means further comprising:
      a block selector for selecting one of the input block and the error block and outputting a selected block;
      a pattern former for receiving transformation coefficients of the untransformed data of the input block from said transformer means and forming and outputting pattern blocks with respect to the individual transformation coefficients, and for storing the pattern blocks and outputting pattern blocks corresponding to an input select index;
      a comparator for selecting a pattern block which best-matches a block selected in the block selector among the pattern blocks and outputting the select index;
      a coefficient restoring portion for restoring the transformation coefficient corresponding to the select index selected by the comparator;
      an error calculator for calculating an error between the block selected by the block selector and the pattern block corresponding to the select index input from the pattern former, and producing an error block to then output the produced error block to the block selector; and
      a completion controller for completing selection of the pattern block in the comparator according to the control signal input from the repetition controller.

Suitably, said pattern former comprises:
an inverse transformer for performing inverse transformation with respect to the input NxN transformation coefficients, forming the NxN pattern blocks, and outputting the pattern blocks to the comparator;
a memory for storing the pattern blocks output from the inverse transformer; and
a controller for outputting pattern blocks corresponding to the select index among the pattern blocks which are stored in the memory according to the select index input from the comparator, to the error calculator.

Suitably, said comparator comprises:
a mean square error calculator for calculating a mean square error of the pattern block with respect to the respective coefficients of the block selected by the block selector and the NxN pattern blocks input from the pattern former;
a bit quantity variation calculator for calculating an amount of variation of the bit quantity generated by additionally adding one coefficient to the bit quantity of the selected coefficients; and
a selector for selecting a pattern block of a coefficient which maximizes a ratio of a mean square error which is calculated by the mean square error calculator with respect to the amount of variation of the bit quantity which is calculated by the bit quantity variation calculator for the NxN pattern block.

Suitably, said block selector selects and outputs an input block in the process of selecting a first transformation coefficient, and selects and outputs an error block between the pattern block with respect to the transformation coefficient which has been selected in the previous process and the input block in the process of selecting the following transformation coefficient.

Suitably, said selector selects a pattern block of a coefficient which maximizes a ratio of a mean square error which is calculated by said mean square error calculator with respect to the amount of variation of the bit quantity which is calculated by said bit quantity variation calculator accordingly to output the select index.

A preferred embodiment of the present invention is described, by way of example only, with reference to the drawings; wherein:
Figure 1 is a block diagram of a general encoding apparatus for encoding an input video signal;
Figure 2A is a block diagram of a second encoder in the Figure 1 apparatus, which is a transformation coding apparatus for a block including a boundary of an object having a certain shape according to prior art;
Figure 2B is a view for explaining an area requiring transformation coefficient selection in the second encoder of Figure 2A;
Figure 3 is a block diagram of a transformation coding apparatus for a block including a boundary of an object having a certain shape according to a preferred embodiment of the present invention;
Figure 4 is a detailed block diagram of the transformation coefficient selector of Figure 3;
Figure 5 is a detailed block diagram of the pattern former of Figure 4; and
Figure 6 is a detailed block diagram of the comparator of Figure 4.

A preferred embodiment of the present invention will be described below in more detail with reference to the accompanying drawings.

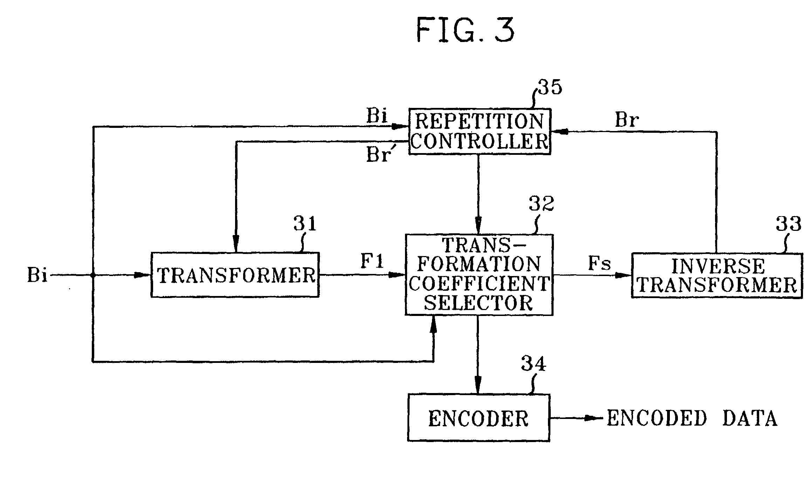

As shown in Figure 3, a transformation coding apparatus for a block including a boundary of an object having a certain shape according to the present invention, includes a transformer 31 for DCT-transforming an NxN sized input block Bi and outputting NxN transformation coefficients F1, a transformation coefficient selector 32 for selecting and outputting transformation coefficients using the transformation coefficients F1 and the input block Bi, an inverse transformer 33 for inversely transforming the selected transformation coefficients Fs and outputting a restored block, an encoder 34 for variable-length-coding the selected coefficients Fs, and a repetition controller 35 for calculating a mean square error of the input block Bi and the restored block Br, comparing the calculated result with a predetermined reference value and outputting a control signal for completing coefficient selection in the transformation coefficient selector 32, if the calculated mean square error is smaller than the reference value.

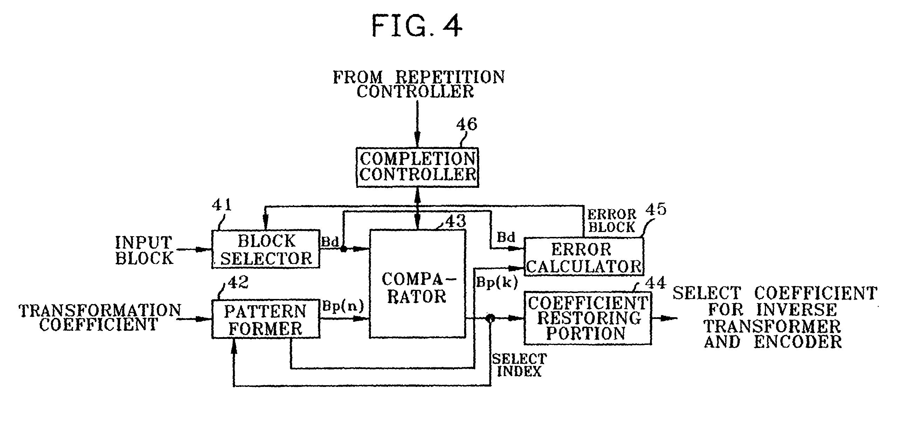

Figure 4 is a detailed block diagram of the transformation coefficient selector of Figure 3. As shown in Figure 4, the transformation coefficient selector 32 includes: a block selector 41 for receiving the input block Bi and selecting one of the input block Bi and the error block and outputting a selected block Bd; a pattern former 42 for receiving transformation coefficients of the input block Bi from the transformer 31 and forming and outputting pattern blocks Bp(n) with respect to the individual transformation coefficients, and for storing the pattern blocks and outputting pattern blocks Bp(k) corresponding to an input select index; a comparator 43 for selecting a pattern block which best-matches a block Bd selected in the block selector 41 among the pattern blocks Bp(n) and outputting the select index; a coefficient restoring portion 44 for restoring the transformation coefficient corresponding to the select index selected by the comparator 43; an error calculator 45 for calculating an error between the block Bd selected by the block selector 41 and the pattern block Bp(k) corresponding to the select index input from the pattern former 42, and producing an error block to then output the produced error block to the block selector 41; and a completion controller 46 for completing selection of the pattern block in the comparator 43 according to the control signal input from the repetition controller 35.

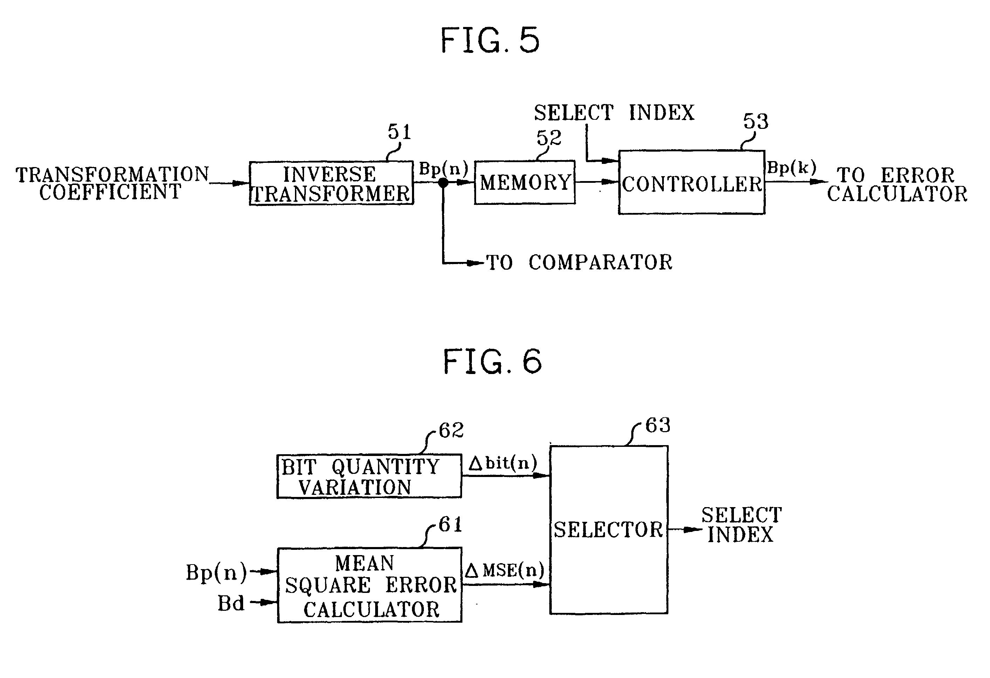

Figure 5 is a detailed block diagram of the pattern former of Figure 4. As shown in Figure 5, the pattern former 42 of Figure 4 includes: an inverse transformer 51 for performing inverse transformation with respect to the input NxN transformation coefficients, forming the NxN pattern blocks Bp(n), and outputting the pattern blocks Bp(n) to the comparator 43; a memory 52 for storing the pattern blocks Bp(n) output from the inverse transformer 51; and a controller 53 for outputting pattern blocks Bp(k) corresponding to the select index among the pattern blocks Bp(n) which are stored in the memory 52 according to the select index input from the comparator 43, to the error calculator 45.

Figure 6 is a detailed block diagram of the comparator of Figure 4. As shown in Figure 6, the comparator of Figure 4 includes: a mean square error calculator 61 for calculating a mean square error of the pattern block with respect to the respective coefficients of the block Bd selected by the block selector 41 and the NxN pattern blocks Bp(n) input from the pattern former 42; a bit quantity variation calculator 62 for calculating an amount of variation of the bit quantity generated by additionally adding one coefficient to the bit quantity of the selected coefficients; and a selector 63 for selecting a pattern block of a coefficient which maximizes a ratio of a mean square error which is calculated by the mean square error calculator 61 with respect to the amount of variation of the bit quantity which is calculated by the bit quantity variation calculator 62 for the NxN pattern block.

The operation of the transformation coding apparatus for a block including a boundary of an object having a certain shape according to this preferred embodiment of the present invention constructed as above will be described in more detail below.

The transformer 31 shown in Figure 3, DCT-transforms the NxN sized block Bi input from the video divider 11 in the general encoding apparatus shown in Figure 1 to produce the NxN transformation coefficients F1. The transformation coefficients F1 are input to the transformation coefficient selector 32. The transformation coefficient selector 32 uses the input NxN transformation coefficients and the input block Bi, and then selects and outputs the transformation coefficient Fs among the NxN transformation coefficients.

The procedure of selecting a predetermined number of the transformation coefficients in the transformation coefficient selector 32 will be described with reference to a detailed block diagram of the transformation coefficient selector 32 shown in Figure 4.

The block selector 41 selects and outputs an input block Bi input from the video divider 11 in the process of selecting a first transformation coefficient, and selects and outputs an error block between the pattern block Bp(k) with respect to the transformation coefficient which has been selected in the previous process and the input block Bi in the process of selecting the following transformation coefficient.

The pattern former 42 forms, outputs and stores pattern blocks Bp(n) with respect to the individual NxN transformation coefficients input from the transformer 31. Also, if the select index k is input, the pattern blocks Bp(k) corresponding to an input select index k among the stored pattern blocks Bp(n) are output. The operation of the pattern former 42 will be described with reference to a detailed block diagram of the pattern former shown in Figure 5. The inverse transformer 51 performs inverse transformation with respect to each of the input NxN transformation coefficients input from the transformer 31, and forms the NxN pattern blocks Bp(n) to output the same. The pattern blocks Bp(n) are output to the comparator 43 and are also stored in the memory 52 of the pattern former 42. The memory 52 stores the pattern blocks Bp(n) output from the inverse transformer 51. The controller 53 receives the select index k and outputs pattern blocks Bp(k) corresponding to the select index among the pattern blocks Bp(n) which are stored in the memory 52 according to the select index input from the comparator 43, to the error calculator 45.

The comparator 43 selects a pattern block which best-matches a block Bd selected in the block selector 41 among the pattern blocks Bp(n) input from the pattern former 42 and outputs the select index k.

The selection operation of the pattern block in the comparator 43 will be described with reference to a detailed block diagram of the comparator 31 shown in Figure 6. The mean square error calculator 61 calculates a mean square error of the pattern block Bd input from the block selector 41 and the pattern blocks Bp(n) input from the pattern former 42, with respect to all the pattern blocks which have not been selected until then, and outputs the results as ÄMSE(n) with respect to each pattern block. The bit quantity variation calculator 62 calculates and stores the bit quantity of the coefficients which have been selected until then, and calculates an amount of variation of the bit quantity generated according to any additional coefficient to output the calculated result as Äbit(n). The selector 63 receives the mean square error ÄMSE(n) and the amount of variation of the bit quantity Äbit(n) and selects a pattern block of a coefficient which maximizes a ratio AMSE(n)/Abit(n) of the mean square error with respect to the amount of variation of the bit quantity, to thereby output the index k as a select index. That is, the selector 63 outputs the select index k which maximizes a ratio of the mean square error ÄMSE(k) which is decreased according to the added k-th coefficient, with respect to the amount Äbit(k) of variation of the bit quantity which is increased according to the added k-th coefficient among the NxN coefficients.

The coefficient restoring portion 44 receives the select index k selected by the comparator 43 and restores and outputs the transformation coefficient corresponding to the select index k. The output transformation coefficient is a select index output from the transformation coefficient selector 32.

The error calculator 45 calculates an error between the block Bd selected by the block selector 41 and the pattern block Bp(k) corresponding to the select index input from the pattern former 42, and produces an error block to then output the produced error block to the block selector 41.

The completion controller 46 completes selection of the pattern block by the comparator 43 according to the control signal input from the repetition controller 35. That is, the completion controller 46 completes the selection of the transformation coefficient by the transformation coefficient selector 32 if the mean square error between the restored block with respect to the selected transformation coefficients and the input block is smaller than the predetermined reference value.

Thus far, the operation of the transformation coefficient selector 32 has been described. Returning to Figure 3, the inverse transformer 33 inversely transforms the transformation coefficients Fs selected by the transformation coefficient selector 32, and then produces the restored block Br. The encoder 34 variable-length-codes the transformation coefficients Fs selected by the transformation coefficient selector 32, and then outputs the encoded data. The repetition controller 35 calculates a mean square error between the transformation coefficient selector 32 and the restored block Br and then allows the transformation coefficient selector 32 to complete the selection of the transformation coefficient if the calculated mean square error is smaller than the reference value in the result of comparison of the latter with the former.

As described above, the transformation coding apparatus for a block including a boundary of an object having a certain shape according to the present invention selects a select coefficient which maximizes a ratio of the mean square error ÄMSE(k) which is decreased according to the added select coefficient (k-th coefficient), with respect to the amount ÄMSE(k) of variation of the bit quantity which is increased according to the added coefficient (k-th coefficient) when selecting a transformation coefficient, to thereby enhance an original quality of picture and reduce the amount of the necessary bits.

While only certain embodiments of the invention have been specifically described herein, it will be apparent that numerous modifications may be made thereto without departing from the scope of the invention.

## Claims

1. A transformation coding apparatus for a block including a boundary of an object having a certain shape, the transformation coding apparatus comprising:
transformer means (31) for transforming untransformed data of an input block and outputting transformation coefficients;
inverse transformer means (33) for inversely transforming transformation coefficients and outputting a restored block;
encoding means (34) for variable-length-coding coefficients; and
a repetition controller (35) for calculating a mean square error of the untransformed data of the input block and the restored block, and comparing the calculated result with a predetermined reference value; **characterised in that** the transformation coding apparatus further comprises:
transformation coefficient select means (32) for selecting and outputting transformation coefficients using the transformation coefficients and the untransformed data of the input block;
the transformation coefficients inversely transformed by the inverse transformer means (33) being those selected by the transformation coefficient select means (32);
the coefficients for variable-length-coding by the encoding means (34) being the select coefficients selected by the transformation coefficient select means (32); and
the repetition controller (35) determining whether or not coefficient selection is continued;
said transformation coefficient select means (32) further comprising:
a block selector (41) for selecting one of the input block and the error block and outputting a selected block;
a pattern former (42) for receiving transformation coefficients of the untransformed data of the input block from said transformer means (31) and forming and outputting pattern blocks with respect to the individual transformation coefficients, and for storing the pattern blocks and outputting pattern blocks corresponding to an input select index;
a comparator (43) for selecting a pattern block which best-matches a block selected in the block selector (41) among the pattern blocks and outputting the select index;
a coefficient restoring portion (44) for restoring the transformation coefficient corresponding to the select index selected by the comparator (43);
an error calculator (45) for calculating an error between the block selected by the block selector (41) and the pattern block corresponding to the select index input from the pattern former (42), and producing an error block to then output the produced error block to the block selector (41); and
a completion controller (46) for completing selection of the pattern block in the comparator (43) according to the control signal input from the repetition controller (35).

2. A transformation coding apparatus for a block including a boundary of an object having a certain shape according to claim 1, wherein said pattern former (42) comprises:
an inverse transformer (51) for performing inverse transformation with respect to the input NxN transformation coefficients, forming the NxN pattern blocks, and outputting the pattern blocks to the comparator (43);
a memory (52) for storing the pattern blocks output from the inverse transformer (51); and
a controller (53) for outputting pattern blocks corresponding to the select index among the pattern blocks which are stored in the memory (52) according to the select index input from the comparator (43), to the error calculator (45).

3. A transformation coding apparatus for a block including a boundary of an object having a certain shape according to claim 1 or claim 2, wherein said comparator (43) comprises:
a mean square error calculator (61) for calculating a mean square error of the pattern block with respect to the respective coefficients of the block selected by the block selector (41) and the NxN pattern blocks input from the pattern former (42);
a bit quantity variation calculator (62) for calculating an amount of variation of the bit quantity generated by additionally adding one coefficient to the bit quantity of the selected coefficients; and
a selector (63) for selecting a pattern block of a coefficient which maximizes a ratio of a mean square error which is calculated by the mean square error calculator (61) with respect to the amount of variation of the bit quantity which is calculated by the bit quantity variation calculator (62) for the NXN pattern block.

4. A transformation coding apparatus for a block including a boundary of an object having a certain shape according to any preceding claim wherein said block selector (41) selects and outputs an input block in the process of selecting a first transformation coefficient, and selects and outputs an error block between the pattern block with respect to the transformation coefficient which has been selected in the previous process and the input block in the process of selecting the following transformation coefficient.

5. A transformation coding apparatus for a block including a boundary of an object having a certain shape according to any preceding claim, wherein said block selector (41) selects a pattern block of a coefficient which maximizes a ratio of a mean square error which is calculated by said mean square error calculator (61) with respect to the amount of variation of the bit quantity which is calculated by said bit quantity variation calculator (62) accordingly to output the select index.

## Patentansprüche

1. Transformationscodiervorrichtung für einen Block, der eine Grenze eines Objekts mit einer bestimmten Form enthält, wobei die Transformationscodiervorrichtung umfasst:
eine Transformierereinrichtung (31) zum Transformieren von nicht transformierten Daten eines eingegebenen Blockes und zum Ausgeben der Transformationskoeffizienten,
eine invertierte Transformierereinrichtung (33) zum invertierten Transformieren von Transformationskoeffizienten und zum Ausgeben eines wiederhergestellten Blocks,
eine Codiereinrichtung (34) zum Codieren der Koeffizienten mit variabler Länge, und
eine Wiederholungssteuereinrichtung (35) zum Berechnen eines gemittelten quadratischen Fehlers für die nicht transformierten Daten des eingegebenen Blocks und des wiederhergestellten Blocks, und zum Vergleichen des berechneten Ergebnisses mit einem vorbestimmten Bezugswert, **dadurch gekennzeichnet, dass** die Transformationscodiervorrichtung weiterhin umfasst:
eine Transformationskoeffizienten-Auswähleinrichtung (32) zum Auswählen und Ausgeben von Transformationskoeffizienten unter Verwendung der Transformationskoeffizienten und der nicht transformierten Daten des eingegebenen Blocks,
wobei die durch die invertierte Transformierereinrichtung (33) invertiert transformierten Transformationskoeffizienten diejenigen sind, die durch die Transformationskoeffizienten-Auswähleinrichtung (32) ausgewählt werden,
wobei die Koeffizienten für die Codierung durch die Codiereinrichtung (34) mit variabler Länge die durch die Transformationskoeffizienten-Auswähleinrichtung (32) ausgewählten Koeffizienten sind, und
die Wiederholungssteuereinrichtung (35) bestimmt, ob die Koeffizientenauswahl fortgesetzt wird oder nicht,
wobei die Transformationskoeffizienten-Auswähleinrichtung (32) weiterhin umfasst:
eine Blockauswähleinrichtung (41) zum Auswählen des eingegebenen Blocks oder des Fehlerblocks und zum Ausgeben des ausgewählten Blocks,
einen Musterbilder (42) zum Empfangen von Transformationskoeffizienten der nicht transformierten Daten des eingegebenen Blocks von der Transformierereinrichtung (31) und zum Bilden und Ausgeben von Musterblöcken für die einzelnen Transformationskoeffizienten sowie zum Speichern der Musterblöcke und zum Ausgeben der Musterblöcke in Übereinstimmung mit einem eingegebenen Auswahlindex,
einen Vergleicher (43) zum Auswählen eines Musterblocks aus den Musterblöcken, der einem in dem Blockauswähler (41) ausgewählten Block am besten entspricht, und zum Ausgeben des Auswahlindexes,
einen Koeffizientenwiederherstellungsteil (44) zum Wiederherstellen des Transformationskoeffizienten in Übereinstimmung mit dem durch den Vergleicher (43) ausgewählten Auswählindex,
einen Fehlerberechner (45) zum Berechnen eines Fehlers zwischen dem durch den Blockauswähler (41) ausgewählten Block und dem Musterblock in Übereinstimmung mit dem aus dem Musterbilder (42) eingegebenen Auswahlindex sowie zum Erzeugen eines Fehlerblocks, um dann den erzeugten Fehlerblock zu dem Blockauswähler (43) auszugeben, und
eine Abschlusssteuereinrichtung (46) zum Abschließen der Auswahl des Musterblocks in dem Vergleicher in Übereinstimmung mit dem von der Wiederholungssteuereinrichtung (35) eingegebenen Steuersignal.

2. Transformationscodiervorrichtung für einen Block, der eine Grenze eines Objektes mit einer bestimmten Form enthält, nach Anspruch 1, wobei der Musterbilder (42) umfasst:
einen invertierten Transformierer (51) zum Durchführen einer invertierten Transformation für die eingegebenen N x N Transformationskoeffizienten, zum Bilden der N x N Musterblöcke und zum Ausgeben der Musterblöcke an den Vergleicher (43),
einen Speicher (52) zum Speichern der aus dem invertierten Transformierer (51) ausgegebenen Musterblöcke, und
eine Steuereinrichtung (53) zum Ausgaben von Musterblöcken aus den im Speicher (52) gespeicherten Musterblöcken in Übereinstimmung mit dem vom Vergleicher (43) eingegebenen Auswahlindex an den Fehlerberechner (45).

3. Transformationscodiervorrichtung für einen Block, der eine Grenze eines Objektes mit einer bestimmten Form enthält, nach Anspruch 1 oder 2, wobei der Vergleicher (43) umfasst:
einen Berechner (61) zum Berechnen eines gemittelten quadratischen Fehlers des Musterblocks für die entsprechenden Koeffizienten des durch den Blockauswähler (41) ausgewählten Blocks und der vom Musterbilder (42) eingegebenen N x N Musterblöcke,
einen Bitquantitätsvariation-Berechner (62) zum Berechnen einer Variationsgröße der Bitquantität, die durch das zusätzliche Hinzufügen eines Koeffizienten zu der Bitquantität der ausgewählten Koeffizienten erzeugt wird, und
einen Auswähler (63) zum Auswählen eines Musterblocks eines Koeffizienten, der ein Verhältnis zwischen einem gemittelten quadratischen Fehler, der durch den Gemittelter-Quadratischer-Fehler-Berechner (61) berechnet wird, und der Variationsgröße der Bitquantität, die durch den Bitquantitätsvariation-Berechner (62) für den N x N Musterblock berechnet wird, maximiert.

4. Transformationscodiervorrichtung für einen Block, der eine Grenze eines Objektes mit einer bestimmten Form enthält, nach wenigstens einem der vorstehenden Ansprüche, wobei der Blockauswähler (41) einen eingegebenen Block während des Prozesses zum Auswählen eines ersten Transformationskoeffizienten auswählt und ausgibt, wobei er weiterhin während des Prozesses zum Auswählen des folgenden Transformationskoeffizienten einen Fehlerblock zwischen dem Musterblock für den im vorangegangenen Prozess ausgewählten Transformationskoeffizienten und dem eingegebenen Block auswählt und ausgibt

5. Transformationscodiervorrichtung für einen Block, der eine Grenze eines Objektes mit einer bestimmten Form enthält, nach wenigstens einem der vorstehenden Ansprüche,
wobei der Blockauswähler (41) einen Musterblock eines Koeffizienten auswählt, der ein Verhältnis zwischen einem gemittelten quadratischen Fehler, der durch den Gemittelter-Quadratischer-Fehler-Berechner (61) berechnet wird, und der Variationsgröße der Bitquantität, die durch den Bitquantitätsvariation-Berechner (62) berechnet wird, maximiert, um dementsprechend den Auswahlindex auszugeben.

## Revendications

1. Appareil de codage par transformation pour un bloc contenant une limite d'un objet ayant une certaine forme, l'appareil de codage par transformation comprenant :
un moyen de transformation (31) destiné à transformer des données non transformées d'un bloc d'entrée et à fournir en sortie des coefficients de transformation;
un moyen de transformation inverse (33) destiné à réaliser une transformation inverse de coefficients de transformation et à fournir en sortie un bloc rétabli;
un moyen de codage (34) destiné à réaliser un codage à longueur variable de coefficients;
un organe de commande de répétition (35) destiné à calculer une erreur quadratique moyenne des données non transformées du bloc d'entrée et du bloc rétabli, et à comparer le résultat calculé avec une valeur de référence prédéterminée; et étant **caractérisé en ce qu'**il comprend également :
un moyen de sélection de coefficients de transformation (32) destiné à sélectionner et à fournir en sortie des coefficients de transformation à l'aide des coefficients de transformation et des données non transformées du bloc d'entrée;
les coefficients de transformation soumis à une transformation inverse par le moyen de transformation inverse (33) étant ceux sélectionnés par le moyen de sélection de coefficients de transformation (32);
les coefficients destinés au codage à longueur variable par le moyen de codage (34) étant les coefficients de sélection sélectionnés par le moyen de sélection de coefficients de transformation (32); et
l'organe de commande de répétition (35) déterminant si la sélection de coefficients est continuée ou non;
ledit moyen de sélection de coefficients de transformation (32) comprenant, en outre :
un sélecteur de bloc (41) destiné à sélectionner le bloc d'entrée ou le bloc d'erreur et à fournir en sortie le bloc sélectionné;
un organe de formation d'image (42) destiné à recevoir des coefficients de transformation des données non transformées du bloc d'entrée à partir dudit moyen de transformation (31), à former et fournir en sortie des blocs images par rapport aux coefficients de transformation individuels, et à stocker les coefficients de transformation individuels et fournir en sortie des blocs images correspondant à un index de sélection d'entrée;
un comparateur (43) destiné à sélectionner un bloc image qui correspond le mieux à un bloc sélectionné dans le sélecteur de blocs (41) parmi les blocs images et à fournir en sortie l'index de sélection:
une partie de rétablissement de coefficient (44) destinée à rétablir le coefficient de transformation correspondant à l'index de sélection sélectionné par le comparateur (43);
un calculateur d'erreur (45) destiné à calculer une erreur entre le bloc sélectionné par le sélecteur de bloc (41) et le bloc image correspondant à l'index de sélection reçu en entrée à partir de l'organe de formation d'image (42), et à produire un bloc d'erreur pour fournir ensuite en sortie le bloc d'erreur produit au sélecteur de bloc (41); et
un organe de commande d'exécution (46) destiné à exécuter une sélection du bloc image dans le comparateur (43) en fonction du signal de commande reçu en entrée à partir de l'organe de commande de répétition (35).

2. Appareil de codage par transformation pour un bloc contenant une limite d'un objet ayant une certaine forme, selon la revendication 1, dans lequel ledit organe de formation d'image (42) comprend :
un transformateur inverse (51) destiné à réaliser une transformation inverse par rapport aux NxN coefficients de transformation d'entrée, à former les blocs images NxN, et à fournir en sortie les blocs images au comparateur (43);
une mémoire (52) destinée à stocker les blocs images fournis en sortie par le transformateur inverse (51); et
un organe de commande (53) destiné à fournir en sortie au calculateur d'erreur (45) des blocs images correspondant à l'index de sélection parmi les blocs images stockés dans la mémoire (52) en fonction de l'index de sélection reçu en entrée à partir du comparateur (43).

3. Appareil de codage par transformation pour un bloc contenant une limite d'un objet ayant une certaine forme, selon la revendication 1 ou la revendication 2, dans lequel ledit comparateur (43) comprend :
un calculateur d'erreur quadratique moyenne (61) destiné à calculer une erreur quadratique moyenne du bloc image par rapport aux coefficients respectifs du bloc sélectionné par le sélecteur de bloc (41) et aux blocs images NxN reçus en entrée à partir de l'organe de formation d'image (42);
un calculateur de variation de quantité de bits (62) destiné à calculer un degré de variation de la quantité de bits généré par l'addition supplémentaire d'un coefficient à la quantité de bits des coefficients sélectionnés; et
un sélecteur (63) destiné à sélectionner un bloc image ayant un coefficient qui optimise un rapport d'une erreur quadratique moyenne calculée par le calculateur d'erreur quadratique moyenne (61) sur le degré de variation de la quantité de bits calculé par le calculateur de variation de quantité de bits (62) pour le bloc image NxN.

4. Appareil de codage par transformation pour un bloc contenant une limite d'un objet ayant une certaine forme, selon l'une quelconque des revendications précédentes, dans lequel ledit sélecteur de bloc (41) sélectionne et fournit en sortie un bloc d'entrée au cours du traitement de sélection d'un premier coefficient de transformation, et un bloc d'erreur entre le bloc image par rapport au coefficient de transformation qui a été sélectionné au cours du traitement précédent, et le bloc d'entrée au cours du traitement de sélection du coefficient de transformation suivant.

5. Appareil de codage par transformation pour un bloc contenant une limite d'un objet ayant une certaine forme, selon l'une quelconque des revendications précédentes, dans lequel ledit sélecteur de bloc (41) sélectionne un bloc image ayant un coefficient qui optimise un rapport d'une erreur quadratique moyenne calculée par ledit calculateur d'erreur quadratique moyenne (61) sur le degré de variation de la quantité de bits calculé par ledit calculateur de variation de quantité de bits (62) pour fournir en conséquence en sortie l'index de sélection.
